# EUROPEAN PATENT APPLICATION

(11) **EP 1 533 606 A1**
(43) Date of publication of application: **25.05.2005**
(21) Application number: 04292737.6
(22) Date of filing: 19.11.2004
(51) Int. Cl.: G01N 21/47, G01N 21/33

(54) **Device and method for measuring ultraviolet light diffusely reflected from an object**

(30) Priority: 19.11.2003 JP 2003388635
(71) Applicant: KANSAI PAINT CO., LTD., Amagasaki-shi, Hyogo-ken (JP)
(72) Inventor: Takeuchi, Tohru, Yokohama-shi, Kanagawa-ken (JP); Masuda, Yutaka, Fujisawa-shi, Kanagawa-ken (JP)
(74) Representative: Lepeudry-Gautherat, Thérèse (FR)

(57) **Abstract**

A reflected ultraviolet light measuring device, a measuring method for measuring ultraviolet light reflection intensity by using the reflected ultraviolet light measuring device, and a valuation method for evaluating ultraviolet light absorbability of an object (m) by using measuring results by the method, said device comprising an irradiating unit comprising a at least one light emitting diode (2a,2b) for irradiating ultraviolet light on an object (m), and a light receiving unit (4) for receiving a reflected light from the object (m), wherein the light receiving unit (4) is arranged at an angle in which a regular reflected light from the object (m) does not enter.

## Description

### BACKGROUND OF THE INVENTION

### Field of the Invention

The present invention relates to a device for measuring the reflection intensity of ultraviolet light and a valuation method for evaluating the ultraviolet light absorbability of an object using the measured value by the device.

### Description of the Related Art

Measuring devices irradiating ultraviolet light on an object have been used in many fields such as chemistry, medical services and the like. For example, Japanese Unexamined PatentPublicationNo. 166542/1997, disclosesamethodinwhich ultraviolet light is irradiated on high polymer materials including an ultraviolet light absorber. According to the method, an amount of ultraviolet light reflected diffusedly from the materials are measured, and by tracing its aged deterioration, a degree of weatherability deterioration of the high polymer materials is evaluated. Although the device used in this method can effectively receive the amount of ultraviolet light reflected diffusedly from the surface of the object, there has been a problem in that the device comprises an integrating sphere for collecting a light reflected on the surface of the obj ect, and uses a black light (BLB, 100W) placed outside of the integrating sphere as a light source, thereby making the structure of the device complicated. Further, in general, the measuring device, which irradiates ultraviolet light or infrared light is heavy in weight and large-sized, and therefore, the places for which they are used is limited.

### SUMMARY OF THE INVENTION

An object of the present invention is to provide a portable type reflected ultraviolet light measuring device, which is small in size and light in weight, a measuring method of the ultraviolet light absorbability of an object using the device, and a valuation method.

To achieve the above described object, the present invention provides a reflected ultraviolet light measuring device, said device comprising at least one irradiating unit comprising a at least one light emitting diode for irradiating ultraviolet light on an object and a light receiving unit for receiving a reflected light from the object and outputting an electrical signal according to the intensity of the received light, wherein the light receiving unit is arranged at an angle on which a regular reflected light from the object is not incident.

In general, when an ultraviolet light is irradiated on an object, a part of the ultraviolet light is absorbed into the object according to ultraviolet light absorption ability of the object, and is reflected as a "regular reflected light" and a "diffused reflected light". The "regular reflected light" in the present specification and claims means "a light reflected from a contact point of an incident light with the object surface , at the same angle as that of the incident light and moreover in a direction opposite to the incident light in respect of a normal line to the object surface", and the "diffusedreflected light" means "an irregularly reflected light diffusing omnidirectionally on the surface of an obj ect" . When a light emitted from the irradiating unit is a collimated light, the angle of the regular reflected light results from the incident angle of the axis of the collimated light. When the light emitted from the irradiating unit is a diffused light spreading to some degree, the regular reflected light has a diffused angle according to the diffused angle of the irradiating light. In this case, there is a possibility that the light receiving unit receives a part of the regular reflected light. However, when the intensity of the peripheral portion of the regular reflected light having the spreading angle is lower compared to the diffused reflected light from the obj ect, and presents no problem for a measurement, reception of such regular reflected light by the light receiving unit is allowable in the present invention. The "angel in which the regular reflected light is not incident" in the present invention includes such an angle.

It is desirable that the irradiating unit and the light receiving unit are arranged, respectively, in such a way that a part of the diffused reflected light from the object is received by the light receiving unit.

For this arrangement, a desirable positional relation between the irradiating unit and the light receiving unit is such that the irradiating unit is arranged at an angle in the range of 5 to 85°, preferably 40 to 50°, to a line central and normal to the opening. The light receiving unit can be arranged in the range of 0 to 5° to the line central and normal to the opening, preferably it is arranged on the normal line. Here, the line central and normal to an opening means a line passing through the center of the opening and extending perpendicularly to the plane of the opening.

It is desirable that the irradiating unit and the light receiving unit are positioned inside a shielding cover provided with an opening on which an object surface abuts.

A plurality of the irradiating units can be provided inside the shielding cover. In this arrangement each irradiating unit and light receiving unit are preferably arranged at an angle not to receive the regular reflected light fromthe obj ect and the irradiating light from mutual irradiating units, respectively. Further, regarding a positional relation between a plurality of irradiating units and light receiving unit, it is desirable that a plurality of irradiating units are arranged at an angle in the range of 5 to 85° to a line normal and central to the opening, and moreover, on a circle having a center on the normal line, and the light receiving unit is arranged on the line central and normal to the opening.

When a plurality of said irradiating units are provided, it is desirable that a plurality of irradiating units for irradiating ultraviolet lights are different in peak wavelengths. For example, it is desirable that the peak wavelengths of the ultraviolet lights irradiated from a plurality of irradiating units are mutually different more than 10 nm. When a plurality of irradiating units having different peak wavelengths inside the shielding cover are provided, the values of ultraviolet light reflection intensities in different wavelengths can be obtained by one set of the device, so that the tendency and the like of reflection intensity can be analyzed in view of the wavelength of the ultraviolet light.

The reflected ultraviolet light measuring device of the present invention can be a portable type.

The present invention further provides a method of measuring the ultraviolet light reflection intensity of the object by using the reflected ultraviolet light measuring device.

Further, the present invention also provides an valuation method of evaluating the ultraviolet light absorbability of an object by using the measured value of the ultraviolet light reflection intensity obtained by the above describedmeasuring method.

The "ultraviolet light absorbability of the object" represents a capability of the object to absorb ultraviolet light, and for example, "high ultraviolet light absorbability of the object" represents the meaning that the object has a capability of absorbing ultraviolet light in abundance.

In the method of the present invention, the "ultraviolet light reflection intensity" and the "ultraviolet light absorbability of the object" have a strong correlation, and for example, the "numerical value of ultraviolet light reflection intensity is large" means that "ultraviolet light absorbability of the object is low". The numerical value itself of ultraviolet light reflection intensity can be relatively handled. That is, the ultraviolet light absorbability of the object can be evaluated by a method of comparing the ultraviolet light reflection intensities of the objects of different sorts, a method of checking an aged deterioration of the ultraviolet light intensity of the object and the like. Further, by checking the aged deterioration of the ultraviolet light absorbability of the object, it is possible to predict the weatherability deterioration of the object.

The "ultraviolet light reflection intensity" in the present invention can be defined, according to the object to be measured, as a value such as an intensity of ultraviolet light received by the entire light receiving surface of the light receiving unit, or an average value, a medium value, or the maximum value of ultraviolet light intensity per an unit area in the light receiving surface, or the like.

Further, an analytical curve can be obtained to show the relation between the "ultraviolet light reflection intensity" obtained by the measuring device of the present invention and an ultraviolet light reflection coefficient obtained by measuring by using a conventional device. This analytical curve is useful to obtain, from the ultraviolet light reflection intensity, the value of the ultraviolet light reflection coefficient, which corresponds to the reflection coefficient value obtained by the conventional device.

The method of the present invention is preferably applied to objects containing an ultraviolet light absorbing material, without any limitation thereto. Such objects are exemplified by a coating film, a commodity on which the coating film is formed, a high polymer material such as plastic, cosmetic, a sheet glass, a rubber sheet and the like. As the ultraviolet light absorbing material, titanium dioxide having an average particle size of 10 to 80 nm such as micro titanium, a pigment such as zinc oxide, an ultraviolet light absorbing compound such as a triazole type compound, resin polymerized with styrene and the like can be exemplified.

A preferable ultraviolet light emitting diode as a light source of the irradiating unit used in the reflected ultraviolet light measuring device of the present invention is a diode which irradiates an ultraviolet light of a peak wavelength of 280 to 400 nm, which wave length corresponds to that of a usual environmental ultraviolet light.

Further, the irradiating unit may install a light-condensing member such as a collimating lens and the like in an irradiating direction of the ultraviolet light emitting diode so that the irradiating light of the violet light emitting diode is not received by the light receiving unit before reaching the object. To prevent the irradiated ultraviolet light from diffusing, a guide member such as a cylindrical cover and the like may be provided around the ultraviolet light emitting diode.

The above described opening is provided in such a way as to contact the object surface for the measuring so as to allow the ultraviolet light to irradiate the object and receive a reflected light from the object and allow the light receiving unit to receive the reflected light. The preferable shape of the opening is a symmetric shape such as a circle, a square and the like, but the shape is not limited to them. Further, a rubber packing and the like for not leaving a space between the object and the opening may be provided around the opening. Advantageously, the shielding cover has a size and a shape to accommodate at least the irradiating unit and the light receiving unit. A control unit and/or a display unit of these units are installed inside or outside the shielding cover. Further, the shielding cover is desirable to be flat at least in the portion where the opening is provided.

According to the reflected ultraviolet light measuring device of the present invention, the irradiating unit for irradiating ultraviolet light on the object comprises at least one ultraviolet light emitting diode, and the light receiving unit is constituted to receive a reflected light fromthe object and output an electrical signal according to the light intensity of the received light. Therefore, the device is light in weight and small in size as a whole, and can be easily carried. Consequently, in the place such as outdoors, a field or a visited place, the measurement of ultraviolet light reflection intensities can be applied to various objects such as a coating film, a high polymer material such as plastic, cosmetic, printing materials and the like. Further, fromthis measured result, the ultraviolet light absorbability of the object can be evaluated.

Moreover, the measuring device of the present invention, despite of being small in size, has an advantage of high accuracy in the measured results. This is because the light receiving unit is arranged at an angle in which the regular reflected light from the surface of the object does not enter. Usually, the arrangement of the ultraviolet light emitting diodes of the irradiating unit make a large light source area since a plurality of light emitting diodes are arranged in a plane as a matrix-shape and the like. Even when the light-condensing member such as a collimating lens and the like is arranged in front of the arrangement of the light emitting diodes, and a guide member such as a cylindrical cover and the like is provided around the arrangement of the ultraviolet light emitting diodes, the similar tendency is shown since the light intensity in the ambient light becomes high comparing to a point light source. The light from the light source having such a wide area generates a regular reflected light from a wide area of the surface of the object. The light intensity of the regular reflected light is widely affectedby smoothness, roughness or unevenness of the surface of the object, or refractive index thereof. Therefore, when the light receiving unit receives the regular reflected light, it is difficult to correctly perform the measurement and evaluation of the ultraviolet light absorbability of the surface of the object.

In the present invention, since the light receiving unit is arranged at an angle in which the regular reflected light from the surface of the obj ect does not enter, a highly accurate measuring result can be obtained despite of the fact that the irradiating unit is constituted by comprising the ultraviolet light emitting diodes.

That is, when the reflected light received at the light receiving unit is a diffused reflected light, a correlation between the "ultraviolet light reflection intensity" measured by the device of the present invention and the "ultraviolet light absorbability of the object" becomes strong and suitable for the evaluation.

Further, a plurality of irradiating units can be provided inside the device. In this case, a plurality of ultraviolet lights different in wavelength are allowed to irradiate in order on the object, and the ultraviolet light reflection intensities by different wavelengths can be obtained in a short time by one set of the device, and many pieces of information on the ultraviolet light absorbability of the object can be obtained.

The features and advantages of the present invention will be more apparent from the following detailed description accompanied with the drawings.

### BRIEF DESCRIPTION OF THE DRAWINGS

FIG. 1 is a block diagram of a reflected ultraviolet light measuring device which is a first embodiment of the present invention; and
FIG. 2 is a block diagram of the reflected ultraviolet light measuring device which is another embodiment of the present invention.

### DETAILED DESCRIPTION OF THE PREFERRED EMBODIMENTS

Best modes of embodiments of a reflected ultraviolet light measuring device and a usage method of the device of the present invention will be described below with reference to the drawings.

### [First Embodiment]

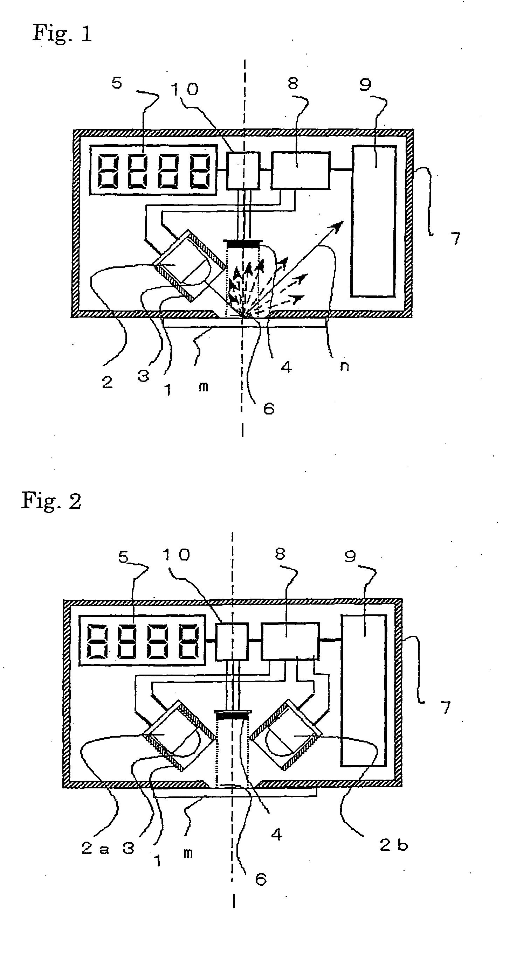

FIG. 1 is a block diagram of a reflected ultraviolet light measuring device which is a first embodiment of the present invention. Referring to FIG. 1, the reflected ultraviolet light measuring device comprises, inside a box shaped shielding cover 7 provided with an opening 6, an irradiating unit 2 comprising a set of ultraviolet light emitting diodes (not shown) for radiating an ultraviolet light of a peak wavelength of 370 nm and a collimating lens 3 inside a cylindrical guide cover 1, a light receiving sensor 4 ("G5842": made by Hamamatsu Photonics K.K., which is a semiconductor UV sensor, and its sensitivity wavelength range is 260 to 400 nm) for receiving a reflected light from an object and converting it into an electrical signal, and a digital indicating device 5 for indicating the electrical signal. The indicating unit of the digital indicating device 5 is arranged to be read from outside the shielding cover. The opening 6 has a shape rounded with semi-circles at respective longitudinal sides of a rectangle.

The irradiating unit 2 is connected to a power source 9 through a constant voltage circuit 8 for adjusting a voltage to a predetermined range, and the light receiving sensor 4 is connected to the digital indicating device 5 through a direct current amplifying circuit 10.

The light receiving sensor 4 is arranged on the line 1 central and normal to the opening 6. The light receiving surface of the light receiving sensor 4 is in parallel with the opening 6. The irradiating unit 2 is so arranged as to have its irradiating direction inclined at an angle of 45° to the line 1 central and normal to the opening 6.

An object m is pressed against periphery of the opening 6 so that the surface of the object is brought into contact thereto. When ultraviolet light is irradiated, the ultraviolet light is incident on the surface of the object m at an angle of 45°, and a part of the ultraviolet lights is absorbed into the object m according to ultraviolet light absorbability of the object m, and other part thereof is regular-reflected at an angle of 45° (regular reflected light n) , and a part of the diffused reflected lights (dotted arrow marks) reflected by the surface of the object is detected by the light receiving sensor 4. The light receiving sensor 4 outputs an electrical signal according to the intensity of the received diffused reflected light, and the signal, after passing through the direct current amplifier circuit 10, is displayed in digital by the digital indicating device 5.

### [Second Embodiment]

FIG. 2 shows a block diagram of a reflected ultraviolet light measuring device which is a second embodiment of the present invention. The reflected ultraviolet light measuring device shown in FIG. 2 comprises, inside a box shaped shielding cover 7 provided with an opening 6, a first irradiating unit 2a comprising a set of ultraviolet light emitting diodes (not shown) for radiating an ultraviolet light having a peak wavelength of 370 nm, a second irradiating unit 2b comprising a set of ultraviolet light emitting diodes (not shown) for radiating an ultraviolet light having a peak wavelength of 390 nm, a light receiving sensor 4, and a digital indicating device 5. The second embodiment is characterized by comprising the irradiating units 2a and 2b having different wavelengths inside the shielding cover 7. The light receiving sensor 4, a power source 9, a constant voltage circuit 8, a direct current amplifying circuit 10 and the digital indicating device 5 are the same as those of the first embodiment. The first irradiating unit 2a comprising the ultraviolet light emitting diodes and the second irradiating unit 2b comprising the ultraviolet light emitting diodes are both arranged on a circle having its center on the normal line 1 and the irradiating angle of the diodes are inclined at the angle of 45° to the normal line 1. The light receiving sensor 4 is arranged on the line 1 normal and central to the opening 6. In the present embodiment, the ultraviolet lights from the irradiating units 2a and 2b are radiated in order at different times, and the reflection intensities of the ultraviolet lights of 370 nm and 390 nm wavelengths are displayed in order in digital. Because of such a structure, one set of this device can obtain the ultraviolet light reflection intensities in different wavelengths.

### [Evaluation Test using Reflection Ultraviolet Light Reflection Measuring Device]

### Preparation of Base Coating Material to Be Applied to Test Color Card

### Manufacturing Examples 1 to 4

By using a solvent type acrylic melamine hard coating material containing aluminum pigment of 10 PHR, base coating materials including an ultraviolet light absorbing material "MT500HD" (see Remark 1) in amounts of 0, 5, 10, and 15PHR were prepared, respectively.

(Remark 1) "MT500HD": fine-particle titanium oxide made by TAYCA Co. Ltd., having an average initial particle of 30 nm (hereinafter referred to as "micro titanium").

### Manufacturing Example 5

In the above described manufacturing example 1, instead of including micro titanium, the base coating material containing 5PHR of "FINEX25A" (see Remark 2) in a coating film as the ultraviolet light absorbing material was prepared.

(Remark 2) "FINEX25A": zinc oxide made by Sakai Chemical Industry Co. Ltd., (hereinafter referred to as "zinc oxide") .

The "PHR" represents a rate of the pigment volume to a resin solid content volume 100 in a coating material.

### Preparation of Test Color Card

### Manufacturing Examples 6 to 10

Eachbase coating material obtained in the above described manufacturing examples 1 to 5 was coated on a steel sheet which is coated with an intermediate coating, so that a dried film thickness becomes 15 to 20 microns (µm) , and was left at rest for one minute, and after that, a melamine hard acryl resin type clear coating was coated, so that the dried film thickness becomes 25 to 30 microns (µm). These sheets were baked on the condition of temperature 140° and 30 minutes to make the coating films hardened. Thus, obtained are micro titanium contained color cards (A1) to (A4) according to the manufacturing examples 1 to 4 and a zinc oxide contained color card (B1) according to the manufacturing example 5.

### Measurement 1 of Ultraviolet Light Reflection Intensity

By using the above descried test color cards (A1) to (A4) , the ultraviolet light reflection intensities were measured by the reflected ultraviolet light measuring device of FIG. 2. The measurement according to the present device was conducted in such a way that a power source switch was turned on, the opening of the present device was pressed against each of the test color card surfaces to contact tightly, and ultraviolet light reflection intensity values (ultraviolet light reflection intensity in the wavelength of 370 nm and ultraviolet light reflection intensity in the wavelength of 390 nm) shown in order in the display unit were read. The result is shown in Table 1.

According to the measuring result shown in Table 1, ultraviolet light reflection intensities of both wavelengths were lower as the including amount of micro titanium increases. Depending on the wavelength, the values of ultraviolet light refection intensity were different, and the ultraviolet light reflection intensity was higher when the wavelength was 390 nm. Thus, the ultraviolet light absorbing material (micro titanium) included in these test samples was proved to have the property of absorbing the ultraviolet light having a wavelength of 370 nm more efficiently than the ultraviolet light having a wavelength of 390 nm.

Table 1 includes the ultraviolet light reflectivity measured by using a commercially available measuring device "UV3100" (which is a UV-visible-IR spectrophotometer made by Shimadzu Corp., , comprising a deuterium D2 lamp as a light source and capable of an accurate measurement). For measurement, a calibration was made in advance by an auxiliary white sheet of barium sulfate, and after that, a measuring mode was set to "reflection", and a measuring wavelengths were set at every 2 nm intervals in the range of 280 to 420 nm, thereby the measurement was performed. The numerical values according to the "UV3100" in Table 1 show selected ultraviolet light reflectivity in the case of the wavelengths 370 nm and 390 nm from among the obtained data.

The numerical values of the measured result obtained by both of the devices were lower as the including amount of micro titanium increases. Hence, to see if there is any correlation between the ultraviolet light reflection intensity value according to the present device and the ultraviolet light reflectivity according to the device "UV3100", the numerical values regarding the wavelength of 370 nm in Table 1 were represented graphically so as to calculate a correlation coefficient. As a result, when the measured values obtained by the present device were taken as y, and the values of the ultraviolet light reflectivity according to the "UV3100" were taken x, a relational expression of y = 18.517 × -10.722 was obtained, thereby obtaining a correlation coefficient r = 0.999. The closer the value of the correlation coefficient comes to 1, it means that the more correct the relational expression is.

The above described device "UV3100" has a size of about 1000 × 650 × 260 mm, and moreover, it is connected to a computer. Therefore, even if the computer is a desk top type, the device is hardly be portable. The reflected ultraviolet light measuring device of the second embodiment of the present invention has a size of about 120 × 60 × 20 mm, and has the same accuracy as that of the ultraviolet light reflectivity by the commercially available measuring device in measuring results, and moreover, it is small in size and portable.

### Measurement 2 of Ultraviolet Light Reflection Intensity

By using the above described test color cards (A1) , (A2) and (B1), the ultraviolet light reflection intensity was measured by the reflected ultraviolet light measuring device of the embodiment of FIG. 2. The result is shown in Table 2. When the measuring results of (A2) and (B1) which are the color cards containing different ultraviolet light absorbing materials are compared, the reflection intensities of the light of 370 nm wavelength are 127 and 137 in (A2) and (B1), and there is almost no difference in the measuring results. In contrast, the reflection intensities of the light of 390 nm wavelength are 658 and 787 in (A2) and (B1), and the measuring results thereof are remarkably different. Further, a ratio of the reflection intensities in the two wavelengths is different, which is 5.18 in the case of micro titanium, and 5.74 in the case of zinc oxide, and this shows that, depending on the types of the ultraviolet light absorber contained in the object, a ratio of the reflection intensities in two wavelengths becomes different. This shows that the color card (A2) containing micro titanium is higher in the ultraviolet light absorbability in a long wavelength than (B1) containing zinc oxide.

In this way, by finding the ultraviolet light reflection intensities in different wavelengths, many pieces of information on the amount and the type of the ultraviolet light absorbing material contained in objects can be obtained.

**Table 1**

| | | test color card | | | |
|---|---|---|---|---|---|
| | | A1 | A2 | A3 | A4 |
| micro titanium additive amount (PHR) | | 0 | 5 | 10 | 15 |
| present device measuring result (ultraviolet light reflection intensity) | 370nm | 142 | 127 | 115 | 99 |
| | 390nm | 793 | 658 | 478 | 404 |
| | ratio | 5.58 | 5.18 | 4.16 | 4.08 |
| "UV3100" measuring result (ultraviolet light reflectivity (%)) | 370nm | 8.2 | 7.5 | 6.8 | 5.9 |
| | 390nm | 41.2 | 34.3 | 25.1 | 21.3 |

**Table 2**

| | | test color card | | |
|---|---|---|---|---|
| | | A1 | A2 | B1 |
| UV absorber additive amount (PHR) | | 0 | 5 | 5 |
| present device measuring result (ultraviolet light reflection intensity) | 370nm | 142 | 127 | 137 |
| | 390nm | 793 | 658 | 787 |
| | ratio | 5.6 | 5.18 | 5.74 |

## Claims

1. Reflected ultraviolet light measuring device, said device comprising at least one irradiating unit (2) comprising at least one light emitting diode for irradiating ultraviolet light on an object, and a light receiving unit (4) for receiving a reflected light from the object and outputting an electrical signal according to intensity of the received light, wherein the light receiving unit is arranged at an angle in which a regular reflected light from the object does not enter.

2. Reflected ultraviolet light measuring device according to claim 1, wherein said irradiating unit (2) and light receiving unit (4) are arranged, respectively, in such a way that a part of a diffused reflected light from an object is received by said light receiving unit.

3. Reflected ultraviolet light measuring device according to claim 1 or 2, wherein said irradiating unit (2) and said light receiving unit (4) are positioned inside a shielding cover (7) comprising an opening (6) on which an object surface abuts.

4. Reflected ultraviolet light measuring device according to claim 3, wherein an axial line of an irradiating light from said irradiating unit (2) is arranged at an angle in the range of 5 to 85° from a line central and normal to said opening (6).

5. Reflected ultraviolet light measuring device according to any one of claims 1 to 4, wherein a plurality of said irradiating units (2a, 2b) are arranged inside a shielding cover (7).

6. Reflected ultraviolet light measuring device according to claim 5, wherein said plurality of irradiating units (2a, 2b) irradiate ultraviolet lights different in peak wavelengths.

7. Reflected ultraviolet light measuring device according to claim 5 or 6, wherein axial lines of irradiating lights of said plurality of irradiating units (2a, 2b) are arranged at angles in the range of 5 to 85° from a line central and normal to said opening (6), and moreover, on a circle having its center on the normal line, and said light receiving unit (4) is arranged on the line central and normal to said opening (6).

8. Reflected ultraviolet light measuring device according to claim 6 or 7, wherein said plurality of irradiating units (2) are constituted in such a way as to irradiate ultraviolet light at different times to each other.

9. Reflected ultraviolet light measuring device according to any one of claims 1 to 8, wherein the device is a portable type.

10. Measuring method for measuring the ultraviolet light reflection intensity of an object by using the reflected ultraviolet light measuring device according to any one of claims 1 to 9.

11. Valuation method for evaluating the ultraviolet light absorbability of an object by using measured values obtained by the method according to claim 10.
